(19) Europäisches Patentamt / European Patent Office / Office européen des brevets

(11) **EP 4 439 005 A1**

(12) **EUROPEAN PATENT APPLICATION**

(43) Date of publication:
**02.10.2024  Bulletin 2024/40**

(21) Application number: **23164424.6**

(22) Date of filing: **27.03.2023**

(51) International Patent Classification (IPC):
**G01B 9/02091** (2022.01)   **G01B 9/02** (2022.01)
**G01B 9/02055** (2022.01)   **G02B 26/10** (2006.01)
**G01B 21/04** (2006.01)   **G02B 26/12** (2006.01)

(52) Cooperative Patent Classification (CPC):
**G01B 9/02091; G01B 9/02044; G01B 9/0207;
G01B 21/042; G02B 26/0833; G02B 26/101;
G02B 26/105;** G01B 2290/65

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Leica Microsystems Inc.
Deerfield, IL 60015 (US)**

(72) Inventor: **GHOFRANI, Mehran
Cary NC, 27519 (US)**

(74) Representative: **Zacco UK Ltd
The Surrey Technology Centre
40 Occam Road
The Surrey Research Park
Guildford, Surrey GU2 7YG (GB)**

(54) **A METHOD FOR CHARACTERIZING A SCANNING MIRROR IN A SCAN CONTROL SYSTEM, A SCAN CONTROL SYSTEM, AND AN OPTICAL COHERENCE TOMOGRAPHY (OCT) SYSTEM COMPRISING SAID SCAN CONTROL SYSTEM**

(57)    Provided is a method for characterizing a scanning mirror in a scan control system to determine feedback parameters for a scanning mirror to be used in a closed-loop feedback configuration of the scan control system. The system (100) comprising: a scanning mirror arrangement (102) comprising the scanning mirror (104); a position sensing detector (106) having a two-dimensional detection surface (108); a light source (110) configured to emit a light beam (112) onto the scanning mirror (104) such that the light beam (112) is deflected onto the position sensing detector (106), wherein the position sensing detector (106) is configured to output a measured position (114) based on the position at which the light beam (112) impinges on the two-dimensional detection surface (108) of the position sensing detector (106), the measured position (114) pertaining to a tilt angle (116) of the scanning mirror (104); a scan mirror controller (118) configured to drive, using drive parameters (120), the scanning mirror arrangement (102) such that the scanning mirror (104) is tilted in angle in two-dimensions; a processor (122) communicatively connected to the scan mirror controller (118) and a memory (123); wherein in the memory (123) comprises at least one of position deviation values (130) and a set of compensated positions (136) for use as feedback parameters for close-loop position feedback (138) in the closed-loop feedback configuration of the scan control system (100), the set of compensated positions (136) pertaining to a determined (208) a set of position deviation values (130) obtained for a set of measured positions (128) relative to a set of reference positions (132).

Figure 1a

Figure 1b

## Description

TECHNICAL FIELD

The present disclosure relates generally to position detection for a scanning mirror. More specifically, the disclosure relates to a method for characterizing a scanning mirror in a scan control system to determine feedback parameters for use in a closed-loop feedback configuration of the scan control system. The disclosure further relates to a scan control system, and an optical coherence tomography (OCT) system comprising the scan control system.

BACKGROUND ART

Optical coherence tomography (OCT) is performed using an optical instrument which allows the generation of a cross-sectional image of biological tissue. It is possible to achieve axial resolutions well below 8 microns using monochromatic light having a constant phase difference which allows OCT scans to be useful in probing living tissue (in vivo) as well as in other applications. As OCT scans cannot penetrate to a great depth they are particularly useful for probing skin tissues and in ophthalmology.

The measuring principle of the OCT system relies on interference of light between a sample light beam scanning a sample and a reference light beam. Put differently, the OCT system comprises a coherent light source, an interferometer having a reference light beam path and a sample light beam path, an optical detection system and scanning mirror arrangements allowing for the sample light beam to be scanned across the sample. Depth information of the sample is obtained by detecting and analysing the interference from backscattered light from different sample depths and light from the reference light beam path.

In more detail, the three-dimensional (3D) OCT imaging of a sample is achieved by combining optical information in the form of interferometric spectra obtained at a position of the sample light beam on the sample in an axial scan with lateral scanning of the sample light beam across the sample. The axial scan may be referred to as longitudinal scan, A-scan, or Z-scan and the lateral scan may be referred to as a B-scan or an XY-scan. The XY-scan may be performed in different lateral scanning patterns, including lines, raster scans, radial scans, circles, or other patterns. Thus, OCT images are obtained from optical interference signals while the OCT system is performing A-scans and XY-scans for a sample. Generally, the A-scans are made at a series of XY coordinates to obtain a volumetric image of a sample. In other words, an A-scan may be acquired at each point in an XY-scan of the sample to build up a complete three-dimensional OCT image of the sample.

SUMMARY STATEMENTS

The disclosed technology seeks to mitigate or obviate at least some of the limitations of closed-loop scan control systems by providing an improved method for characterizing the scanning mirror. An improved position feedback for the scan control system may further be obtained. In particular, but not exclusively, some embodiments of the disclosed technology provide improved accuracy in determining and correcting for deviations in position of the scanning mirror in optical coherence tomography (OCT) systems.

The following summary statements set out features, which may be preferred features in some embodiments, of the disclosed technology. The invention is defined by the accompanying claims.

The disclosed technology may relate to a spectral domain OCT system. Some embodiments of the disclosed technology provide a scan control system having a configuration which supports a particularly compact housing design for an OCT optical system. Such a design is beneficial for use in surgical applications where the OCT system is provided as an adapter for a microscope. The OCT scan arrangement may be based on micro-electromechanical system (MEMS) scanning mirror arrangement as MEMS designs allow for miniaturization of the OCT system, fast scan speeds and cost-efficient manufacturing.

According to a first aspect of the disclosed technology there is provided a method for characterizing a scanning mirror in a scan control system to determine feedback parameters for use in a closed-loop feedback configuration of the scan control system. The system comprising: a scanning mirror arrangement comprising the scanning mirror; a position sensing detector having a two-dimensional detection surface; a light source configured to emit a light beam onto the scanning mirror such that the light beam is deflected onto the position sensing detector, wherein the position sensing detector is configured to output a measured position based on the position at which the light beam impinges on the two-dimensional detection surface of the position sensing detector, the measured position pertaining to a tilt angle of the scanning mirror; a scan mirror controller configured to drive, using drive parameters, the scanning mirror arrangement such that the scanning mirror is tilted in angle in two-dimensions, and a processor communicatively connected to the scan mirror controller; wherein the method comprises: scanning, by the scan mirror controller, the scanning mirror by using a set of drive parameters thereby forming a scan pattern on the position sensing detector as the light beam is scanned across the two-dimensional detection surface of the position sensing detector; determining, by the position sensing detector a set of measured positions for the scan pattern; linking the set of measured positions with the set of drive parameters; determining a set of position deviation values for the set of measured positions relative to a set of reference positions pertaining to a reference scan pattern using a mathematical model; determining a set of compensated positions by applying a position compensation algorithm to the determined set of position deviation values, wherein the position compensation algorithm comprises a relationship between the set of measured positions and tilt angles for the scanning mirror; and storing at least one of the set of position deviation values and the set of compensated positions for use as feedback parameters for position feedback in the closed-loop feedback configuration of the scan control system.

An advantage being that a method for providing a more accurate position of the scanning mirror is provided. The method allows for a correction of position. Put differently, an efficient method for characterizing the determined position of a scanning mirror in a scan control system is provided. In more detail, the method allows for an improved detection of the position of the scanning mirror as determined by the measured position at which the light beam impinge on the position sensing detector (PSD). Artefacts due to, for example, variations in curvature along the optical path for the light beam before impinging of the PSD may be corrected for. Put differently, the method provides feedback parameters to be used in a closed-loop feedback configuration of the scan control system. The scan control system may be understood as being configured to be operational in a closed-loop. The scan control system may be referred to as a closed-loop scan control system. To this end, the method allows for characterization and correction of projection distortions such as keystone and/or non-linear effects pertaining to the tilt motion of the scanning mirror. Distortions pertaining to a coupling in motion between different mirror tilt axes may moreover be reduced. Optical artifacts and image distortions that may be mitigated or reduced by the method may be caused by an isolated factor or a combination of factors. The factors may include, but not be limited to, the angle of incidence for a light beam on the scanning mirror, tipping and tiling angles of the scanning mirror, the separation between the surface of the scanning mirror and the center of rotation for the scanning mirror, the separation and orientation of the position sensing detector relative to the scanning mirror, the position of reflection of the light beam on the scanning mirror and the distance between the center of rotation and the center of reflection for the scanning mirror.

To this end, the method may allow for a more accurate position of the scanning mirror to be determined and used as feedback for the scan mirror control. Put differently, the method allows for corrections of determined positions such that more accurate positions may be used for the feedback loop. A more accurate scanning of the scanning mirror may thereby be achieved. A more reliable OCT system is provided. More accurately positioned OCT images may moreover be obtained which is beneficial for instance for use in surgical applications.

To this end, the close-loop feedback has a technical benefit in that it allows the OCT system to generate more B-scans per second of the object of interest being scanned by suppression of ringing behaviour and resonant behaviour caused by a step change in driving voltage at the end of a scan line. The closed-loop configuration allows for better mirror positioning performance. The characterization of the mirror position distortion may, however be achieved in an open-loop configuration. The method allows for a more accurate characterization of the position of the scanning mirror. The method further allows for a correction of the measured positions such that the scan control system may be operated more accurately in a closed-loop configuration. Put differently, the closed-loop configuration is used to stabilize and increase the performance of the scanning mirror. The closed-loop configuration may be referred to as a closed-loop feedback configuration. The open-loop configuration may be referred to as an open-loop feedback configuration.

Automated position calibration may further be provided. Demands and limitations pertaining to additional equipment for determining position may moreover be reduced or mitigated. OCT systems that provide better guidance to a surgeon or other users of the OCT system may further be provided.

In some embodiments, the scanning, by the scan mirror controller, the scanning mirror and the determining, by the position sensing detector a set of measured positions for the scan pattern are performed in an open-loop configuration of the scan control system. Thus, the method may comprise setting, by the scan mirror controller, the scan control system in an open-loop configuration. The setting, by the scan mirror controller, the scan control system in the open-loop configuration may be performed prior to the scanning and the determining.

An advantage being that a more accurate characterization of the tilting motion of the scanning mirror may be performed.

In some embodiments, the determining of the set of position deviation values for the set of measured positions relative to the set of reference positions may be performed by curve fitting using the mathematical model.

An advantage being that a more precise correction is achieved. A deviation between measured positions and reference positions may more accurately be determined. Interpolation between data points further allows for a more accurate set of position deviation values to be obtained by the curve fitting.

In some embodiments, the reference scan pattern may be a straight-line scan pattern along an x-axis of the position sensing detector and wherein the set of position deviation values are determined along a y-axis of the position sensing detector, the y-axis being orthogonal to the x-axis.

In some embodiments, the position sensing detector may form a plane and has a coordinate system having an x-axis and a y-axis spanning the plane. The x-axis and y-axis may be orthogonal. The x-axis and y-axis may be aligned with the physical edges of the surface of the PSD, respectively.

An advantage being that the position at which the light beam impinge on the surface of the PSD is less complex to determine.

In some embodiments, wherein the mathematical model is a parabolic equation in the form:

$$\hat{y} = a_\emptyset \, x^2 + b_\emptyset \, x + c_\emptyset \qquad \text{(Eq 1)}$$

, where y is a measured position of the set of measured positions along the y-axis for a position x along the x-axis of the position sensing detector and wherein $a_\emptyset$, $b_\emptyset$, and $c_\emptyset$ are coefficients.

An advantage being that an efficient curve fit may be achieved. Non-linear deviations may moreover be effectively corrected for. The method allows for a characterization and correction of keystone effect. The method may be applied real-time.

In some embodiments, the method may further comprise performing a curve fit to the measured data. The curve fit may comprise the mathematical model. The method may further comprise: assessing by mathematical analysis the quality of the curve fitting.

An advantage being that the accuracy of the curve fitting may be assessed. The mathematical analysis may by way of example be a residual map. A threshold value for the quality of curve fitting may moreover be set. An assessment of the quality resulting below the threshold value may prompt a new scan of the calibration sample. Alternatively, a new curve fitting function or new curve fit may be applied.

In some embodiments, the position compensation algorithm comprises a mathematical expression in the form:

$$y = \hat{y} \, / (K_a \, x^2 + K_b x + K_c) \qquad \text{(Eq 2)}$$

, where y is the compensated position of the set of compensated positions, and $\hat{y}$ is the measured position of the set of measured positions along the y-axis, $K_a$, $K_b$, and $K_c$ are constant coefficients relating to a change in the coefficients $a_\Phi$, $b_\Phi$, and $c_\Phi$ of Eq 1, as a function of the tilt angle, $\Phi$, for the scanning mirror along the y-axis.

An advantage being that a robust relationship between measured position and tilt angle for the scanning mirror may be determined. The position of the scanning mirror may thereby be more accurately determined. A more precise control of the scanning mirror position may thereby be provided. An improved feedback loop for the closed-loop configuration of the scan control system may be provided by use of the compensated positions. A real-time correction may, moreover, be provided. A further advantage being that the coefficients describing the keystone effect may be stored as the set of position deviation values. Thus, the coefficients may be used as feedback parameters for the closed-loop position feedback in the closed-loop feedback configuration of the scan control system. By way of example, the feedback parameters may comprise the coefficients for applying Equation 2.

In some embodiments, a change in the coefficients $a_\Phi$, $b_\Phi$, and $c_\Phi$ of Eq 1, may have a linear relationship of the form:

$$a_\emptyset = K_a \, y \qquad \text{(Eq 3)}$$

$$b_\emptyset = K_b \, y \qquad \text{(Eq 4)}$$

$$c_\emptyset = K_c \, y \qquad \text{(Eq 5)}$$

wherein, $\Phi$ is the tilt angle for the scanning mirror for a compensated position y along the y-axis.

An advantage being that a more precise and robust correlation between compensated position and tilt angle may be obtained. A more robust characterization of the scanning mirror may be obtained. An improved correction of the position for the scanning mirror may moreover be provided. Automated procedures for determining the position of the scanning mirror may further be implemented. A more consistent method may thereby be provided.

In some embodiments, the method may further comprise: determining a first curvature distortion for the scanning mirror by using a first curvature compensation algorithm, the algorithm comprising a mathematical model on the form:

$$\hat{x} = a_\theta \, y^2 + b_\theta y + x \qquad \text{(Eq 6)}$$

, where $\hat{x}$ is the measured position of the set of measured positions along the x-axis and $a_\theta$ and $b_\theta$ are coefficients of curvature describing the curvature distortion; and determining a set of compensated positions by compensating for the deviation in x value along the x-axis for the set of measured positions using the expression:

$$x = \hat{x} - (a_\theta y^2 + b_\theta y) \qquad \text{(Eq 7)}$$

, where x is the compensated position for a measured position $\hat{x}$ of the set of measured positions along the x-axis; and storing the set of compensated positions and/or position deviation values in the form of the coefficients of curvature for use as feedback parameters for the closed-loop position feedback in the closed-loop feedback configuration of the scan control system.

An advantage being that a curvature in the motion of the scanning mirror resulting in a curvature in along the y-axis may be corrected as such curvature may introduce an error in the measured position along the x-axis as the position along the y-axis is changed. A further advantage being that compensated positions may efficiently be computed for subsequently measured positions using the coefficients of curvature. Put differently, corrected position values may effectively be computed for any subsequently measured positions. The feedback parameters may comprise the coefficients of curvature. By way of example, the feedback parameters may comprise the coefficients for applying Equation 7.

In some embodiments, the method may further comprise: determining a second curvature distortion for the scanning mirror by using a second curvature compensation algorithm, the algorithm comprising a mathematical model of the form:

$$\hat{y} = \tilde{a}_{\emptyset} x^2 + \tilde{b}_{\emptyset} x + y \qquad \text{(Eq 8)}$$

, where $\hat{y}$ is the measured position along the y-axis of a set of measured positions, y is the compensated position, $\tilde{a}_{\emptyset}$ and $\tilde{b}_{\emptyset}$ are coefficients describing the curvature distortion, and x is the compensated position along the x-axis; determining a set of compensated positions by compensating for the curvature distortion in measured positions along the y-axis using the expression:

$$y = \hat{y} - (\tilde{a}_{\emptyset} x^2 + \tilde{b}_{\emptyset} x) \qquad \text{(Eq 9)}$$

and storing set of compensated positions and/or position deviation values in the form of the coefficients describing the curvature distortion for use as feedback parameters for the closed-loop position feedback in the closed-loop feedback configuration of the scan control system.

An advantage being that a curvature introduced on the x-axis due to the light beam not being centered on the scanning mirror may be corrected for. A simpler correction of the system is therefore provided. An advantage being that compensated positions may efficiently be computed for subsequently measured positions using the coefficients describing the curvature distortion. Put differently, corrected position values may effectively be computed for any subsequently measured positions. The feedback parameters may comprise the coefficients describing the curvature distortion. By way of example, the feedback parameters may comprise the coefficients for applying Equation 9.

A second aspect of the disclosed technology comprises a scan control system for controlling mirror position for a scanning mirror in a closed-loop feedback configuration. The system being arranged to perform the method as described above. The system comprising a scanning mirror arrangement comprising the scanning mirror; a position sensing detector having a two-dimensional detection surface; a light source configured to emit a light beam onto the scanning mirror such that the light beam is deflected onto the position sensing detector, wherein the position sensing detector is configured to output a measured position based on the position at which the light beam impinges on the two-dimensional detection surface of the position sensing detector, the measured position pertaining to a tilt angle of the scanning mirror; a scan mirror controller configured to drive, using drive parameters, the scanning mirror arrangement such that the scanning mirror is tilted in angle in two-dimensions; a processor communicatively connected to the scan mirror controller, wherein the scan mirror controller is configured to receive at least one of the set of position deviation values and a set of compensated positions for use as feedback parameters for position feedback in the closed-loop feedback configuration of the scan control system , the set of compensated positions pertaining to a position compensation algorithm being applied to a determined set of position deviation values, wherein the determined set of position deviation values is determined, using a mathematical model, for a set of measured positions relative to a set of reference positions; and wherein the position compensation algorithm comprises a relationship between the set of measured positions and tilt angles for the scanning mirror.

Effects and features of the second aspect are to a large extent analogous to those described above in connection with the first aspect. Embodiments mentioned in relation to the first aspect are largely compatible with the second aspect.

A third aspect of the disclosed technology comprises a scan control system for controlling mirror position for a scanning mirror in a closed-loop feedback configuration. The system comprising: a scanning mirror arrangement comprising the scanning mirror; a position sensing detector having a two-dimensional detection surface; a light source configured to emit a light beam onto the scanning mirror such that the light beam is deflected onto the position sensing detector, wherein the position sensing detector is configured to output a measured position based on the position at which the light beam impinges on the two-dimensional detection surface of the position sensing detector, the measured position pertaining to a tilt angle of the scanning mirror; a scan mirror controller configured to drive, using drive parameters, the scanning mirror arrangement such that the scanning mirror is tilted in angle in two-dimensions; a processor communicatively connected to the scan mirror controller and a memory; wherein in the memory comprises at least one of position deviation values and a set of compensated positions use as feedback parameters for position feedback in the closed-loop feedback configuration of the scan control system, the set of compensated positions pertaining to a determined a set of position deviation values obtained for a set of measured positions relative to a set of reference positions.

An advantage being that a closed-loop control system may be provided which comprises compensated positions. Put differently, a system having corrected positions values may thereby be provided. Demands for correction of a control system when, by way of example, delivered to a costumer, may be reduced.

Effects and features of the third aspect are to a large extent analogous to those described above in connection with the first and the second aspects. Embodiments mentioned in relation to the first and second aspects are largely compatible with the third aspect.

In some embodiments, the two-dimensional detection surface of the position sensing detector is a flat surface.

In some embodiments, the scanning mirror arrangement is a micro-electromechanical system (MEMS) scanning mirror arrangement.

An advantage being that that an efficient scanning of the sample light beam may be achieved. Fast scan speeds and reduced footprint may be achieved by using a MEMS scanning mirror.

A fourth aspect of the disclosed technology comprises use of the system as described above for optical coherence tomography, OCT, based microscopy.

Effects and features of the fourth aspect are to a large extent analogous to those described above in connection with the first, second and third aspects described above. Embodiments mentioned in relation to the first, second and third aspects are largely compatible with the fourth aspect.

A fifth aspect of the disclosed technology comprises an optical coherence tomography (OCT) system configured to operate using the scan control system as described above. The OCT system further comprising: a sample light source configured to emit a sample light beam onto the scanning mirror such that the sample light beam is deflected onto a sample, wherein the scan controller is configured to laterally scan the sample light beam across a surface of the sample using the close-loop position feedback; and an optical detection system configured to detect light reflected back from the sample such that an optical image of the sample is obtained, and a reference light beam, wherein the OCT system is configured to generate axially resolved optical information from the sample as the sample light beam is scanned laterally across the sample by using optical path length differences (OPLD) between the reference light beam and the sample light beam.

Effects and features of the fifth aspect are to a large extent analogous to those described above in connection with the first, second, third and fourth aspects described above. Embodiments mentioned in relation to the first, second, third and fourth aspects are largely compatible with the fifth aspect.

An advantage being that an improved closed-loop configuration for the scan control system is provided that can be used in the OCT system. The scan control system and related methods allow for improved position detection. Put differently, the OCT system may utilize a scan control system comprising stored feedback parameters for position feedback in the closed-loop feedback configuration of the scan control system. Put differently, the feedback parameters may comprise at least one of the set of position deviation values and the set of compensated positions. The position deviation values may be in the form of the coefficients pertaining to a mathematical description of the curvature distortion. An OCT system configured such that the OCT imaging can be performed in a reliable manner with higher accuracy and without significant cost increases to the scan control systems is therefore provided.

An advantage of the OCT system is that efficient generation of a cross-sectional images of biological tissue may thereby be obtained. By way of example, the OCT system allows for imaging of the distinctive layers of a biological sample such as a retina. A more accurate positioning and imaging allows for improved characterization of the biological sample. The images acquired may allow for characterization and identification of diseases of the retina.

A sixth aspect of the disclosed technology comprises a computer program with a program code for performing the method according to the first aspect when the computer program is run on a processor.

Effects and features of the sixth aspect are to a large extent analogous to those described above in connection with the first, second, third, fourth, and fifth aspects. Embodiments mentioned in relation to the first, second, third, fourth, and fifth aspects are largely compatible with the sixth aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and it may be readily apparent to combine such features disclosed in the context of one aspect or embodiment above with those disclosed in the description someone of ordinary skilled in the art.

DESCRIPTION OF THE ACCOMPANYING DRAWINGS

Some embodiments of the disclosed technology will now be described by way of example only and with reference to the accompanying drawings in which:

Figure 1 shows schematically a scan control system;

Figure 2 shows a general block diagram showing the method according to some embodiments.

Figure 3 shows schematically a spectral domain optical coherence tomography (OCT) system comprising the scan control system;

Figure 4 illustrates by way of example characterization of scanning mirror to determine compensated positions allowing for a correction of mirror positions for a scanning mirror according to some embodiments;

Figure 5 illustrates by way of example characterization of scanning mirror to determine compensated positions allowing for a correction of mirror positions for a scanning mirror. according to some embodiments;

Figures 6 to 10, illustrates by way of examples optical distortions caused by keystone effect and curvature together with corrections in determined position;

Figure 11 shows a schematic illustration of a system configured to perform the method described herein.

DETAILED DESCRIPTION

The detailed description set forth below provides examples of embodiments of the disclosed technology which are explained in sufficient detail to enable those skilled in the art to put the disclosed technology into practice.

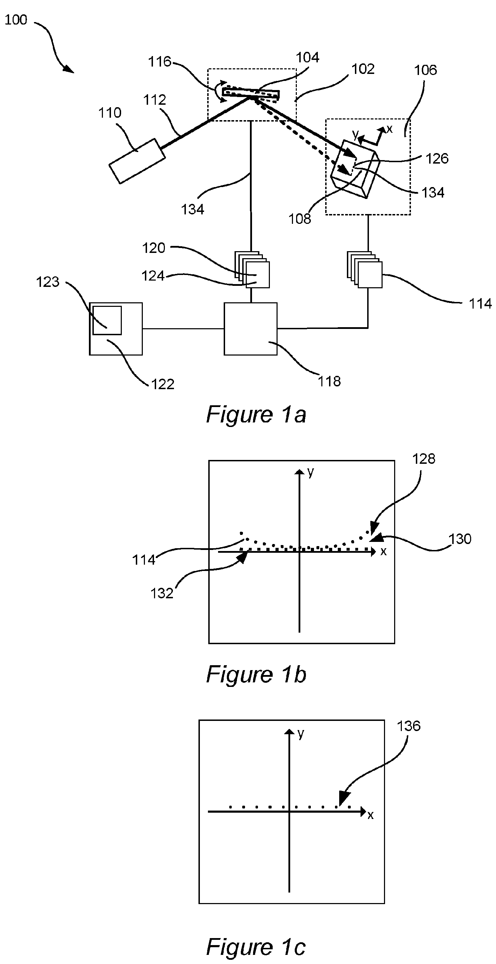

Figure 1 shows schematically a scan control system 100 according to some embodiments. The system 100 may be configured in an open-loop configuration or a closed-loop configuration. The system 100 is configured to operate in an optical coherence tomography system, as will be described. The scan control system 100 comprises a scanning mirror arrangement 102 comprising the scanning mirror 104; a position sensing detector 106 having a two-dimensional detection surface 108; a light source 110 configured to emit a light beam 112 onto the scanning mirror 104 such that the light beam 112 is deflected onto the position sensing detector 106. The position sensing detector 106 is configured to output a measured position 114 based on the position at which the light beam 112 impinges on the two-dimensional detection surface 108 of the position sensing detector 106. The measured position 114 pertains to a tilt angle 116 of the scanning mirror 104. The system 100 further comprises a scan mirror controller 118 configured to drive, using drive parameters 120, the scanning mirror arrangement 102 such that the scanning mirror 104 is tilted in angle in two-dimensions, and a processor 122 communicatively connected to the scan mirror controller 118. The processor 122 may be communicatively connected to a memory 123.

In some embodiments, the position sensing detector (PSD) provides an analog output directly proportional to the position at which the light beam impinges on the surface of the PSD. The surface of the PSD may comprise a detector active area arranged such that the light beam impinges on the detector active area. The PSD may further be configured to provide position as well as light intensity. The PSD may be a continuous analog position sensing detector. The PSD may be configured such that a photoelectric current generated by the light beam impinging on the surface of the PSD may flow through the PSD.

The position sensing detector 106 may form a plane. The position sensing detector 106 may have a coordinate system having an x-axis and a y-axis spanning the plane. The y-axis may be orthogonal to the x-axis. A graphical representation of the measured positions 128 are illustrated in Figure 1b. In more detail, the position of the light beam 112 on the two-dimensional detection surface 108 of the position sensing detector 106 provides a measured position 114 pertaining to a tilt angle 116 of the scanning mirror 104.

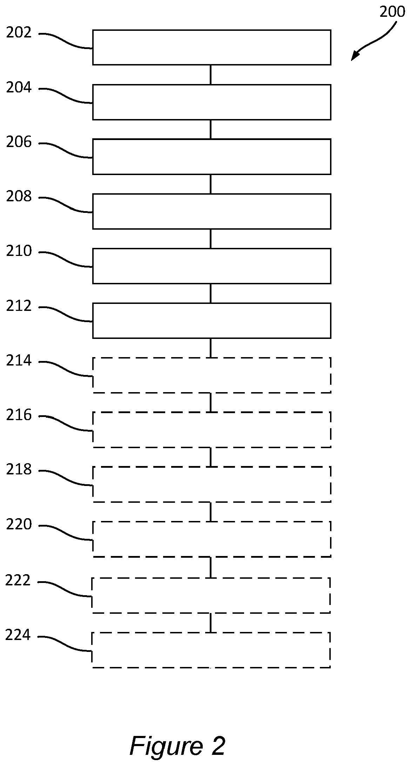

Figure 2 shows a general block diagram showing a method 200 for characterizing a scanning mirror in a scan control system to determine feedback parameters for a scanning mirror to be used in a closed-loop feedback configuration of the scan control system 100.

With reference to Figures 1 and 2, the method 200 will be exemplified according to some embodiments. The method 200 comprises: scanning 202, by the scan mirror controller 118, the scanning mirror 104 by using a set of drive parameters 124 thereby forming a scan pattern 126 on the position sensing detector 106 as the light beam 112 is scanned across the two-dimensional detection surface 108 of the position sensing detector 106, as illustrated in Figure 1a. The scanning 202 may be performed in an open-loop configuration of the scan control system 100. Put differently, the scanning 202 may be performed while the closed-loop configuration of the scan control system 100 is in a disengaged state. The position of the scan mirror 104 is thereby not adjusted by feedback signals from the scan-control system 100. Thus, the scan control system may be set in an open-loop configuration.

The method 200 further comprises determining 204, by the position sensing detector 106 a set of measured positions 128 for the scan pattern 126, see Figure 1b, and linking 206 the set of measured positions 128 with the set of drive parameters 124. A relationship between drive parameters and position at which the light beam 112 is impinging on the position sensing detector 106 may thereby be provided. A relationship between tilt angle 116 of the scanning mirror 104 and the measured position 114 may further be provided. The determining 204 may be performed in an open-loop configuration of the scan control system 100.

The method further comprises determining 208 a set of position deviation values 130 for the set of measured positions 128 relative to a set of reference positions 132 pertaining to a reference scan pattern 134 using a mathematical model. The set of position deviation values 130 may be understood as a set of values pertaining to a difference between a set of actual position values and a set of determined position values. An actual position value pertains to an actual tilt angle 116 of the scanning mirror 104. The determined position value may be understood as the value pertaining to the position at which the light beam 112 is impinging on the PSD whereby a measured position is determined. Put differently, the measured position 114 or the set of measured positions 128 are positions as detected by the PSD. By determining a set of position deviation values 130 distortions such as projections distortion, e.g. keystone or curvature may be corrected for as will be discussed. In other words, the distortions may cause a deviation such that the position at which the light beam impinge on the PSD is displaced. As a result, a less accurate determining of the position, i.e. tilt angle, of the scanning mirror may achieved. To this end, less accurate positions may induce errors in the closed-loop feedback.

By way of example, position deviation values 130 are illustrated in Figure 1b illustrated as a difference (distance) in position between the set of measured positions 128 relative to a set of reference positions 132. The reference positions 132 pertaining to a reference scan pattern 134. As an example, the reference pattern 134 is illustrated as a line, see Figure 1a. The reference pattern may in other examples be a two-dimensional pattern such as a square or rectangle. The reference pattern may be a scan pattern to be used for OCT imaging.

Figure 1b illustrates that the set of measured positions 128 form a curved line. The position deviation values 130 may here be understood as deviations along the y-axis as compared with the set of reference scan positions 132 illustrated by the straight line along the x-axis.

The method 200 further comprises determining 210 a set of compensated positions 136 by applying a position compensation algorithm to the determined set of position deviation values 130, wherein the position compensation algorithm comprises a relationship between the set of measured positions 128 and tilt angles 116 for the scanning mirror 104; and storing 212 at least one of the set of position deviation values 130 and the set of compensated positions 136 for use as feedback parameters for the closed-loop position feedback 138 in the closed-loop feedback configuration of the scan control system 100. The method 200 therefore allows for more accurate characterization of the position of the scanning mirror 104. Put differently, the method 200 further allows for a more accurate determining of the position, i.e. tilt angle, of the scanning mirror. Errors induced by distortion in the movement of the scanning mirror, the alignment of the light beam on the scanning mirror or projection distortions pertaining to compound angle effects and/or distortions such as keystone effects may be corrected for. A more accurate position of the scanning mirror may thereby be determined. An improved closed-loop feedback for the scan control system 100 is further achieved by using the at least one of the set of position deviation values 130 and the set of compensated positions 136 for use as feedback parameters for position feedback when the scan control system 100 is in the closed-loop feedback configuration.

By way of example, Figure 1c illustrates a graphical representation of the set of compensated positions 136 obtained by the method 200 that may be used as feedback parameters for position feedback when the scan control system 100 is in the closed-loop feedback configuration. As a result, the set of compensated positions 136 form a straight line along the x-axis in agreement with the set of reference positions 132 as illustrated in Figure 1b. A correction for the determined scanning mirror position may therefore obtained.

The determining 204 of the set of position deviation values 130 for the set of measured positions 128 relative to the set of reference positions 132 is performed by curve fitting using the mathematical model. By way of example, the mathematical model may be a of parabolic form.

As illustrated in Figures 1a and 1b, the reference scan pattern 134 may be a straight-line scan pattern along an x-axis of the position sensing detector 106. The set of position deviation values 130 may be determined along a y-axis of the position sensing detector 106. The y-axis may be orthogonal to the x-axis.

According to some embodiments a scan control system for controlling mirror positions for a scanning mirror in a closed-loop feedback configuration is provided. With reference to Figures 1 and 2, the system 100 being configured to perform the method 200. The system 100 is further configured to use feedback parameters for position feedback 138 in the closed-loop feedback configuration of the scan control system 100.

As illustrated in Figure 1a, the system 100 comprising: a scanning mirror arrangement 102 comprising the scanning mirror 104; a position sensing detector 106 having a two-dimensional detection surface 108; a light source 110 configured to emit a light beam 112 onto the scanning mirror 104 such that the light beam 112 is deflected onto the position sensing detector 106, wherein the position sensing detector 106 is configured to output a measured position 114 based on the position at which the light beam 112 impinges on the two-dimensional detection surface 108 of the position sensing detector 106, the measured position 114 pertaining to a tilt angle 116 of the scanning mirror 104; a scan mirror controller 118 configured to drive, using drive parameters 120, the scanning mirror arrangement 102 such that the scanning mirror 104 is tilted in angle in two-dimensions; a processor 122 communicatively connected to the scan mirror controller 118, wherein the scan mirror controller 118 is configured to receive at least one of the set of position deviation values 130 and a set of compensated positions 136 for use as feedback parameters for position feedback 138 in the closed-loop feedback configuration of the scan control system 100, the set of compensated positions 136 pertaining to a position compensation algorithm being applied to a determined set of position deviation values 130, wherein the determined set of position deviation values 130 is determined, using a mathematical model, for a set of measured positions 128 relative to a set of reference positions 132; and wherein the position compensation algorithm comprises a relationship between the set of measured positions 128 and tilt angles 116 for the scanning mirror 104.

According to some embodiments, a scan control system comprising corrected mirror positions for a scanning mirror may be provided. Put differently, the scan control system comprises the set of compensated position values such that that corrected positions for the scanning mirror are used in the closed-loop feedback. A more accurate representation of the position of the scanning mirror is there by utilized for feedback. Put differently, a closed-loop scan control system for controlling mirror position for a scanning mirror in a closed-loop feedback configuration is provided. With reference to Figure 1, the system 100 comprising: a scanning mirror arrangement 102 comprising the scanning mirror 104; a position sensing detector 106 having a two-dimensional detection surface 108; a light source 110 configured to emit a light beam 112 onto the scanning mirror 104 such that the light beam 112 is deflected onto the position sensing detector 106, wherein the position sensing detector 106 is configured to output a measured position 114 based on the position at which the light beam 112 impinges on the two-dimensional detection surface 108 of the position sensing detector 106, the measured position 114 pertaining to a tilt angle 116 of the scanning mirror 104; a scan mirror controller 118 configured to drive, using drive parameters 120, the scanning mirror arrangement 102 such that the scanning mirror 104 is tilted in angle in two-dimensions; a processor 122 communicatively connected to the scan mirror controller 118 and a memory 123; wherein in the memory 123 comprises at least one of position deviation values 130 and a set of compensated positions 136 for use as feedback parameters for closed-loop position feedback 138 in the closed-loop feedback configuration of the scan control system 100. The set of compensated positions 136 pertains to a determined 208 a set of position deviation values 130 obtained for a set of measured positions 128 relative to a set of reference positions 132.

According to some embodiments, the scanning mirror arrangement 102 is a micro-electromechanical system, MEMS, scanning mirror arrangement.

A MEMS scanning mirror arrangement in a closed-loop scan control system may therefore be provided. A method for detecting and correcting the MEMS position may be provided. In more detail, the position of the scanning mirror is determined using the light source, such as a laser or LED, to project the light beam on to the scanning mirror, the light being projected off the scanning mirror onto the position sensing detector (PSD). Put differently, the position of the scanning mirror, i.e. to detect the tilt angle of the scanning mirror is thereby detected

According to some embodiments, the system 100 may be used for optical coherence tomography (OCT) based microscopy, as will be discussed.

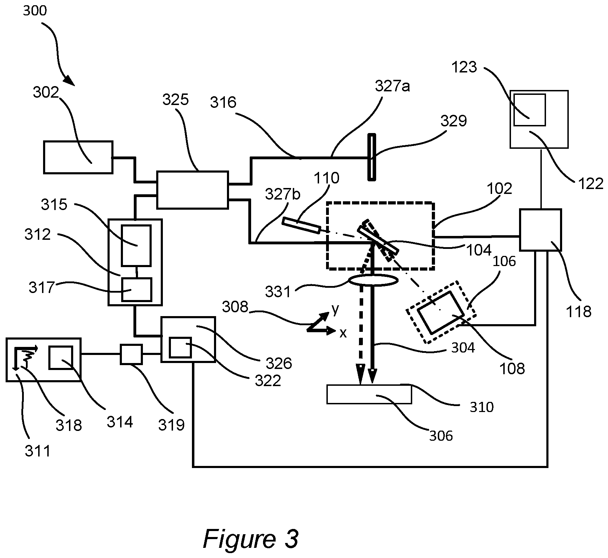

To this end, Figure 3 shows schematically an OCT system comprising the scan control system 100. The OCT system 300 is configured to operate using the scan control system 100. The OCT system 300 further comprising: a sample light source 302 configured to emit a sample light beam 304 onto the scanning mirror 104 such that the sample light beam 304 is deflected onto a sample 306. The scan mirror controller is configured to laterally scan 308 the sample light beam 304 across a surface 310 of the sample 306 using the close-loop position feedback 138. The OCT system 300 further comprising an optical detection system 312 configured to detect light reflected back from the sample 306 such that an optical image 314 of the sample 306 is obtained, and a reference light beam 316. The OCT system 300 is configured to generate axially resolved optical information 318 from the sample 306 as the sample light beam 304 is scanned laterally 308 across the sample 306 by using optical path length differences OPLD, between the reference light beam 316 and the sample light beam 304.

In more detail, the light source 110 is arranged such that the light beam 112 is deflected on the scanning mirror at a different incident angle than that of sample light beam 304 used for OCT imaging, and impinge on the surface of the position sensing detector 106 such that the mirror position can be determined.

In more detail, there are two forms of OCT scanning, time-domain OCT (TD-OCT) and spectral domain OCT (SD-OCT). SD-OCT uses spectral interrogation of the spectrum at the OCT interferometer output. Figure 3 schematically shows the principles of operation of an example spectral domain optical coherence tomography, SD-OCT system 100 which some embodiments of the disclosed technology may be used to implement. The SD-OCT system may interchangeable in the following be referred to as an OCT system. The example OCT system 300 shown in Figure 3 according to the disclosed technology may be used to generate optical coherence tomograms of in-vivo tissue samples, such as of a human eye. Figure 3 is schematic only and is drawn not to scale and the position of various components and their relative sizes do not necessarily reflect their relative positions or sizes in embodiments of the disclosed technology.

An example optical image 314 is illustrated in Figure 3 as displayed on a computer display 311 of the OCT system 300. The optical image 314 may comprise a lateral scan (XY-scan) image and an axial scan (z-scan) image.

The example OCT system 300 may use a low coherence broadband optical sample light source 302. The optical detection system 312 may further comprise a spectrometer 315 configured to obtain spectral information and a photodetector arrangement 317 configured to detect light intensity. The OCT system 100 may comprise an image acquisition unit 319. The image acquisition unit 319 may be configured to control the OCT system 300 such that OCT images 314 may be acquired. The OCT system 300 may comprise a processor 322.

The processor 322 may form part of a computer system 326. The OCT images 314 may be displayed on the computer display 311 connected to the computer 326. The image acquisition unit 319 may be configured to control, via the scan mirror controller 118, the scanning mirror arrangement 102. The image acquisition unit 319 and/or the computer 326 may be configured to process image data obtained by the optical detection system 310. The image acquisition unit 319 and/or the computer 326 may be connected to the optical detection system 310.

According to other embodiments, the OCT system 300 may comprise more than one processor. By way of example, the processor 122 communicatively connected to the scan mirror controller 118 may be different from the processor 322 connected to the image acquisition unit 319. In other examples, the processors 122 and 322 may be the same processor.

As shown in Figure 3, a suitable broad-beam low coherence sample light source 113 may be used to generate the sample light beam 304 scanning the sample 310. One example broadband sample light source 302 has a central wavelength of 860 nm, with a bandwidth of 100 nm. One or more light sources 302 may be used to provide the broad-band low coherence sample light source over the desired bandwidth. The sample light source 302 may, by way of example, be a broadband light source such as light emitting diode (LED), a super luminescent diode (SLD), or a supercontinuum source.

In more detail, the function of the OCT system is based on interference between the reference light beam 316 and the sample light beam 304. The interference may be understood to be between a reference light beam path and a sample light beam path along which the reference light beam 316 and the sample light beam 304 propagate respectively. Depth information of the sample is obtained by detecting and analysing the interference from backscattered light from different sample depths and light from the reference light beam path. Put differently, OPLD may be used to obtain the depth information along an axial direction of the sample.

By way of example, light from the sample light source 302 may pass through a light coupler 325 which splits the light into the reference beam 316 which follows a reference light beam path 327a and the sample light beam 302 which follows a sample light beam path 327b. The reference light beam path 327a may comprise a reference mirror 329 reflecting the reference light beam 316.

Light returned from the reference light beam path 327a and the sample light beam path 327b may interfere in the coupler 325 to the optical detection system 310. Light from the sample light beam 304 back-scattered or reflected or otherwise returned from the sample 306 may thereby provide optical information pertaining to the sample 306.

In some embodiments, one or more of the reference light beam path 327a or the sample light beam path 327b, may be provided using suitable single-mode optical fibres and/or include one or more sections where a beam following the optical fibre travels in free space. In some embodiments of the disclosed technology, although the optical path lengths of the reference light beam path 327a and sample light beam path 327b are matched, the dispersive properties of the optical fibre each beam travels along may differ to improve the removal of a complex conjugate image from the OCT image 314 output. A variety of other techniques may be used in other embodiments of the disclosed technology to reduce or remove the presence of a complex conjugate image in the OCT image 314 output.

In the example shown schematically in Figure 3 of OCT system 300, the sample light source 302 generates an OCT scanning or sample light beam 304 which illuminates the sample 306 being scanned over a range of wavelengths, and all are measured simultaneously using the spectrometer 315 or other suitable type of interference detector. The spectrometer 315 measures spectral interference from the sample reflected sample light beam 304. In other words, intensity modulations in the returned light as a function of frequency is measured. The rate of variation of intensity over different frequencies may be indicative of the location of the different reflecting layers in the samples.

The sample light beam 304 of the OCT system 300 may be directed via a an objective lens 331 towards a focal point on the sample 306, the focal point being laterally scanned.

The scanning mirror arrangement 102 is exemplified to comprise a scanning mirror arrangement as a micro-electromechanical system (MEMS) based scanning mirror 104. The scanning mirror arrangement 102 may be referred to as a micro-electromechanical system, MEMS, scanning mirror arrangement.

The scanning mirror arrangement may alternatively be a galvanometer-based mirror arrangement.

The OCT system 300 may be incorporated into or attached to a surgical microscope (not shown).

The drive parameters may pertain to drive voltages for deflecting the scanner arrangement. The drive voltages and the deflection may have a linear relationship. The deflection may be understood as a change in tilt angle for the scanning mirror. The drive parameters may pertain to a tilt along the x-axis and/or a tilt along the y-axis. A scanning in two-dimension may thereby be obtained.

The scan mirror controller may be configured to control the drive voltages for the scanning mirror arrangement. Put differently, the scan mirror controller may control the scan operation of the scanning mirror arrangement. The scanning mirror arrangement may deflect the sample light beam from the light source in a first angle range. The scanning mirror arrangement may deflect the sample light beam from the light source in a second angle range. The first and the second angle ranges may be orthogonal. A two-dimensional scan area may thereby be obtained.

The scanning mirror controller may be controlled by a control computer that is configured to synchronize, drive, trigger, store and acquiring image data, and/or performing signal and image processing necessary to obtain image representations of the scanned sample. The control computer may comprise a display arrangement for displaying the image representations.

The light source 110 may, by way of example, be a light emitting diode (LED), or a laser.

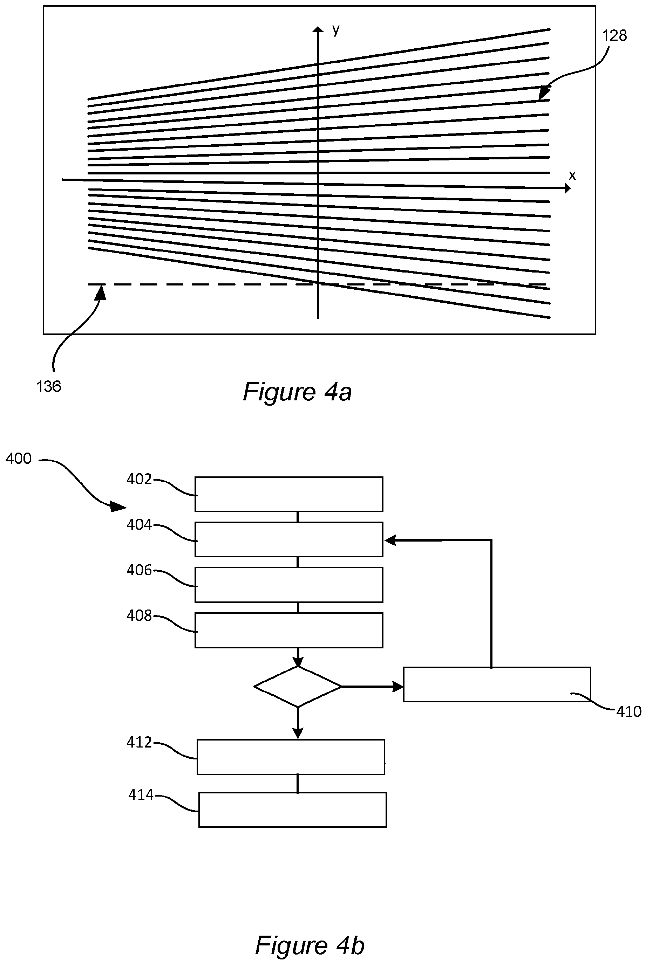

With reference to Figure 4, a correction of a keystone effect is described using the model 200 as described above. The keystone effect may in this context be understood as an apparent distortion of an image, i.e. a scan image, caused by the projection of the deflected light beam 112 onto the position sensing detector, PSD. The surface of the PSD may be understood to be at an angle relative to the scanning mirror. Put differently, the light beam may be incident on the PSD at an angle. By way of example, the keystone distortion may result in a distortion of image dimensions. For example, a square scan outline for the scanning mirror may result in a trapezoid scan pattern on the PSD. Hence, the measured scan pattern may be understood to deviate from a reference pattern.

Figure 4 illustrates characterization of scanning mirror to determine position deviation values and/or compensated positions allowing for a correction of measured mirror positions for a scanning mirror. The characterization of the scanning mirror may be obtained in an open-loop configuration of the scan control system. Compensation coefficients and/or the compensation positions may thereafter be used in a closed-loop configuration of the scan control system according to some embodiments.

By way of example, the method 200 comprises collecting a set of scan curves by sweeping the light beam across the PSD along the x-axis of the PSD, with incremental steps along the y-axis. A modelled result is illustrated in Figure 4a. The angle of incident is as an example set to 67.5°. The method 200 may be used to correct position deviations caused by the keystone effect. In the following, it will be detailed how the set of measured positions 128 may be corrected by the method 200, see Figure 2 and the description above. With reference to Figures 1, 2 and 4, the method 200 comprises determining 208 a set of position deviation values 130 for the set of measured positions 128 relative to a set of reference positions 132 pertaining to a reference scan pattern 134 using a mathematical model. The reference scan pattern 134 may here be understood as a number of straight lines along the x-axis separated by incremental steps along the y-axis. The method 200 further comprising: determining 210 a set of compensated positions 136 by applying a position compensation algorithm to the determined set of position deviation values 130. The position compensation algorithm comprises a relationship between the set of measured positions 128 and tilt angles 116 for the scanning mirror 104. Put differently, the method 200 allows for a determining of a set of compensated positions 136 an applying the position compensation algorithm to correct for the keystone distortion in real-time. This may be understood as applying the position compensation algorithm to the set of measured positions to obtain a set of compensated positions.

By way of example, the mathematical model may be a parabolic equation in the form:

$$\hat{y} = a_\emptyset x^2 + b_\emptyset x + c_\emptyset \qquad \text{(Eq 1)}$$

, where y is a measured position of the set of measured positions 130 along the y-axis for a position x along the x-axis of the position sensing detector 106 and wherein $a_\emptyset$, $b_\emptyset$, and $c_\emptyset$ are coefficients. Put differently, the optical modeling of a distortion caused by a compound angle motion of the scanning mirror may be described by equation 1. In other words, equation 1 may be used for a curve fit to the set of measured positions 128 for each of the set of scan curves. The coefficients for of each curve may be calculated and stored in the memory 123, see Figure 1a.

By way of example, the position compensation algorithm may comprise a mathematical expression in the form:

$$y = \hat{y} / (K_a x^2 + K_b x + K_c) \qquad \text{(Eq 2)}$$

, where $y$ is the compensated position of the set of compensated positions 136, and $\hat{y}$ is the measured position of the set of measured positions 128 along the y-axis, $K_a$, $K_b$, and $K_c$ are constant coefficients relating to a change in the coefficients $a_\Phi$, $b_\Phi$, and $c_\Phi$ of Eq 1, as a function of the tilt angle, $\Phi$, 116 for the scanning mirror 104 along the y-axis. In other words, y is the keystone corrected value of the position of the light beam 112 impinging on the PSD. Equation 2 provides a low computation overhead correction for the keystone effect that may be used in the closed-loop feedback configuration of the scan control system 100 to correct for the distortion in real-time.

To this end, the change in the coefficients $a_\Phi$, $b_\Phi$, and $c_\Phi$ of Eq 1, has a linear relationship of the form:

$$a_\emptyset = K_a y \qquad \text{(Eq 3)}$$

$$b_\emptyset = K_b y \qquad \text{(Eq 4)}$$

$$c_\emptyset = K_c y \qquad \text{(Eq 5)}$$

wherein, $\Phi$ is the tilt angle 116 for the scanning mirror 104 for a compensated position y along the y-axis. A relationship between the set of measured positions 128 and tilt angles 116 for the scanning mirror 104 may thereby be obtained. A relationship between the set of compensated positions 136 and tilt angles 116 for the scanning mirror 104 may further be obtained.

Equation 2 provides a low computation overhead correction for the keystone effect that may be used in the controller loop to correct for the distortion in real-time. A trend in the coefficients as a function of y may further be determined using a linear least square curve fit. The resulting set of three coefficients $K_a$, $K_b$, and $K_c$ will be saved in a memory and applied during scan mirror controller runtime.

The coefficients $a_\emptyset$, $b_\emptyset$ and $c_\emptyset$ are a function of scanning mirror tilt in along a tilt axis corresponding y axis of the PSD. As a result, a set of n by three coefficients may be obtained, see the matrix in equation 5b:

$$\begin{bmatrix} a_{\emptyset 1} & b_{\emptyset 1} & c_{\emptyset 1} \\ a_{\emptyset 2} & b_{\emptyset 2} & c_{\emptyset 2} \\ a_{\emptyset n} & b_{\emptyset n} & c_{\emptyset n} \end{bmatrix} \qquad \text{(Eq 5b)}$$

By way of example, a set of compensated positions 136 are illustrated for a y position in Figure 4a. A more accurate determining of the mirror position may thereby be provided.

In Figure 4b, a flow chart illustrating characterization and determining of compensation coefficients for the scanning mirror to obtain the compensated positions as described in connection with Figure 4a is exemplified. In more details, the characterization of the scanning mirror may be obtained in an open-loop configuration of the scan control system. The compensation coefficients and/or the compensation coefficients may be used in a closed-loop configuration of the scan control system. The flow chart 400 comprises:

> setting 402 the scanning mirror to a tilt angle 116 pertaining to a minimum x position and a minimum y position along the x-axis and the y-axis, respectively;
> scanning 404 incrementally the scanning mirror by tilting the scanning mirror across a scan range in tilt angle θ in defined steps such that the light beam is scanned across the position sensing detector, PSD, along the x-axis; and
> recording 406 for each scan position of the light beam a set of measured positions at the PSD, the measured positions comprising an x-coordinate along the x-axis and a y-coordinate along the y-axis;
> for each scan line applying 408 a curve fit to determine the coefficients of equation 1; and
> incrementally increase 410 the tilt angle Φ along the y-axis up to a maximum value in y position; and
> if the y angle pertains to a maximum value in y: applying 412 curve fits to the each of the columns of equation 5b to determine the coefficients $K_{a\Phi}$, $K_{b\Phi}$, and $K_{c\Phi}$; and

storing 414 the determined coefficients in a memory.

It may be noted that the setting 402 of the scanning mirror to a tilt angle 116 pertaining to a minimum x position and a minimum y position along the x-axis and the y-axis, respectively may be optional. According to other embodiments, the scanning may start at other starting points on the PSD.

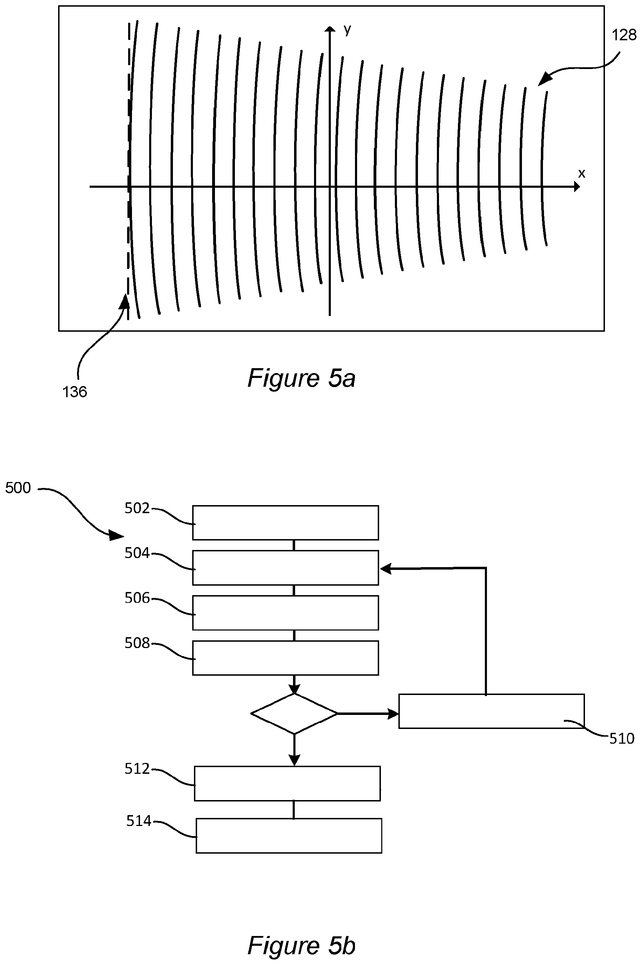

Figure 5 illustrates characterization of scanning mirror to determine position deviation values and/or compensated positions allowing for a correction of measured mirror positions for a scanning mirror. The characterization of the scanning mirror may be obtained in an open-loop configuration of the scan control system. Compensation coefficients and/or the compensation positions may thereafter be used in a closed-loop configuration of the scan control system according to some embodiments.

By way of example the method comprises collecting a set of scan curves by sweeping the light beam across the PSD along the y-axis of the PSD, with incremental steps along the x-axis. A modelled result is illustrated in Figure 5a. The angle of incident is as an example set to 67.5°. The method 200 may be used to correct position deviations caused by curvature. The curvature may be introduced by the effect of a compound angle for the light beam projected on the PSD. The curvature may be induced by the distance between the center of rotation and the center of reflection for the scanning mirror and the position of reflection of the light beam on the scanning mirror.

In the following, it will be detailed how the set of measured positions 128 may be corrected by the method 200, see Figure 2 and the description above. The method 200 comprises: determining 214 a first curvature distortion for the scanning mirror 104 by using a first curvature compensation algorithm, the algorithm comprising a mathematical model on the form:

$$\hat{x} = a_\theta y^2 + b_\theta y + x \qquad \text{(Eq 6)}$$

, where $\hat{x}$ is the measured position of the set of measured positions 128 along the x-axis and $a_\theta$ and $b_\theta$ are coefficients of curvature describing the curvature distortion. The tilt angle, $\Theta$, 116 for the scanning mirror 104 is along the x-axis. The method 200 further comprises and determining 216 a set of compensated positions 136 by compensating for the deviation in x value along the x-axis for the set of measured positions 128 using the expression:

$$x = \hat{x} - (a_\theta y^2 + b_\theta y) \qquad \text{(Eq 7)}$$

, where $x$ is the compensated position for a measured position $\hat{x}$ of the set of measured positions 128 along the x-axis. A curvature induced by the distance between the center of rotation and the center of reflection for the scanning mirror may thereby be compensated. A set of compensated positions 136 are illustrated by the dashed line in Figure 5a.

Equation 7 provides a low computation overhead correction for the curvature that may be used in the controller loop to correct for the distortion in real-time.

The coefficients $a_\Theta$, $b_\Theta$, and $c_\Theta$ are a function of mirror tilt in the x direction:

$$\begin{bmatrix} a_{\theta 1} & b_{\theta 1} & c_{\theta 1} \\ a_{\theta 2} & b_{\theta 2} & c_{\theta 2} \\ a_{\theta n} & b_{\theta n} & c_{\theta n} \end{bmatrix} \quad \text{(Eq 7b)}$$

To this end, the change in the coefficients ae, be, and ce of Eq 6, may have a linear relationship of the form:

$$a_\Theta = K_a \, x \quad \text{(Eq 7c)}$$

$$b_\Theta = K_b \, x \quad \text{(Eq 7d)}$$

$$c_\Theta = K_c \, x \quad \text{(Eq 7e)}$$

wherein, $\Theta$ is the tilt angle 116 for the scanning mirror 104 for a compensated position x along the x-axis.

The trend in these coefficients as a function of x may be determined by applying the least squares curve fit to determine $K_{a\theta}$, $K_{b\theta}$, and $K_{c\theta}$. For the purpose correcting the error the curvature introduces into the x position, the $K_{c\theta}$ coefficient may be assumed to be zero.

The method 200 may further comprise storing 218 the set of compensated positions 136 and/or position deviation values 130 in the form of the coefficients of curvature for use as feedback parameters for the closed-loop position feedback 138 in the closed-loop feedback configuration of the scan control system.

In Figure 5b, a flow chart illustrating characterization and determining of compensation coefficients for the scanning mirror to obtain the compensated positions as described in connection with Figure 5a is exemplified. In more details, the characterization of the scanning mirror may be obtained in an open-loop configuration of the scan control system. The compensation coefficients and/or the compensation coefficients may be used in a closed-loop configuration of the scan control system. The flow chart 500 comprises:

setting 502 the scanning mirror to a tilt angle 116 pertaining to a minimum x position and a minimum y position along the x-axis and the y-axis, respectively;
scanning 504 incrementally the scanning mirror by tilting the scanning mirror across a scan range in tilt angle $\Phi$ in defined steps such that the light beam is scanned across the position sensing detector, PSD, along the y-axis; and
recording 506 for each scan position of the light beam a set of measured positions at the PSD, the measured positions comprising an x-coordinate along the x-axis and a y-coordinate along the y-axis;
for each scan line applying 508 a curve fit to determine the coefficients of equation 6; and
incrementally increase 510 the tilt angle $\theta$ along the x-axis up to a maximum value in x position; and

if the x angle pertains to a maximum value in x:

applying 512 curve fits to the each of the columns of equation 7b to determine the coefficients $K_{a\theta}$, $K_{b\theta}$, and $K_{c\theta}$; and
storing 514 the determined coefficients in a memory.

With regards to curvature induced on the x-axis due to the light beam not being centred on the mirror the method 200 may provide a correction. With reference to Figure 2, the method 200 further comprises:

determining 220 a second curvature distortion for the scanning mirror 104 by using a second curvature compensation algorithm, the algorithm comprising a mathematical model of the form:

$$\hat{y} = \tilde{a}_\phi x^2 + \tilde{b}_\phi x + y \quad \text{(Eq 8)}$$

, where $\hat{y}$ is the measured position along the y-axis of a set of measured positions 130, $y$ is the compensated position, $\tilde{a}_\phi$ and $\tilde{b}_\phi$ are coefficients describing the curvature distortion, and x is the compensated position along the x-axis. The method further comprises: determining 222 a set of compensated positions 136 by compensating for the curvature distortion in measured positions along the y-axis using the expression:

$$y = \hat{y} - (\tilde{a}_\phi x^2 + \tilde{b}_\phi x) \quad \text{(Eq 9)}$$

The method 200 may further comprise storing 224 set of compensated positions 136 and/or position deviation values 130 in the form of the coefficients describing the curvature distortion for use as feedback parameters for the closed-loop position feedback 138 in the closed-loop feedback configuration of the scan control system.

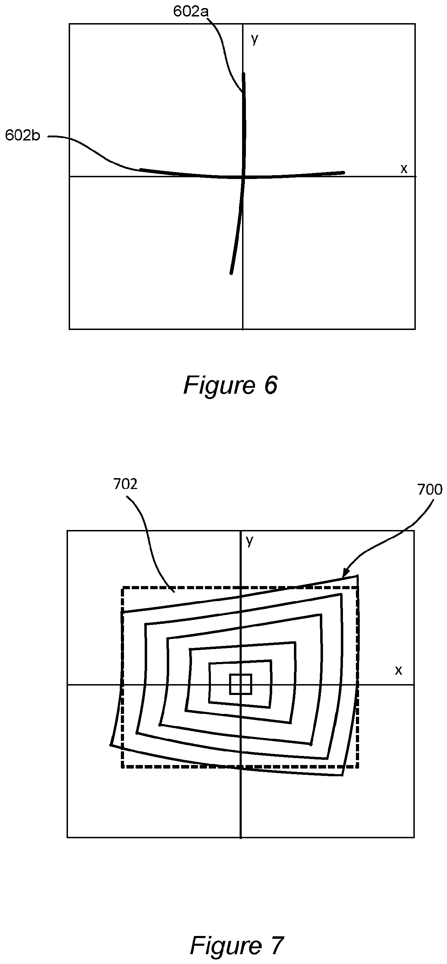

With reference to Figures 6 to 10, examples of optical distortions caused by keystone effect and curvature are exemplified together with corrections in position by using the method 200 described above.

Figure 6 illustrates the curvature for two orthogonal scan lines 602a, 602b along the x-axis and the y-axis, respectively. The curvature is caused by a compound angle projection of the light beam on the position sensing detector. The scan lines 602a and 602b where obtained in an open-loop configuration of the scan control system 100.

Figure 7 illustrates projections 700 of a number of rectangular scan patterns. The scan patterns where obtained in an open-loop configuration of the scan control system 100. The projections 700 pertain to the scan patterns of the light beam across the position sensing detector. The dashed line illustrates a reference scan pattern 702. The reference scan pattern 702 pertaining to a desired scan pattern without aberrations.

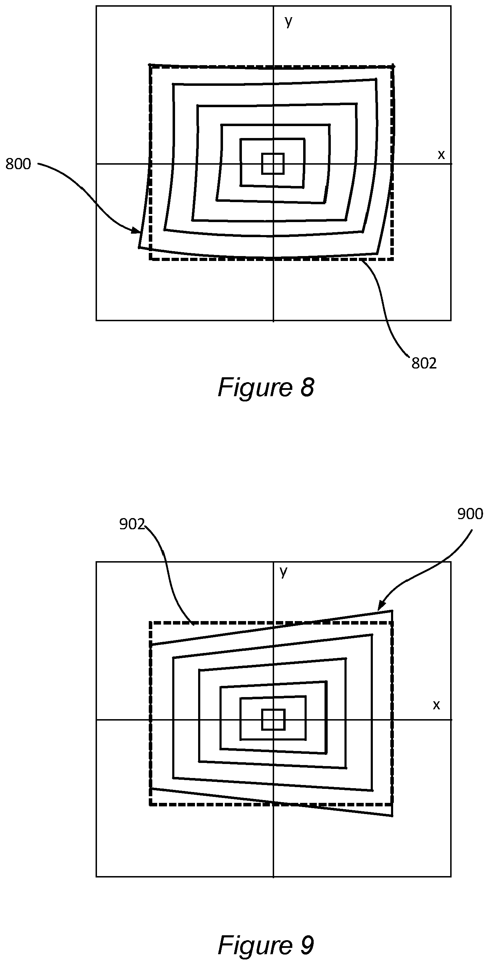

Figure 8 illustrates projections 800 corresponding to the projections 700 of Figure 7 but after the method 200 has been used to correct for keystone distortion. The dashed line illustrates a reference scan pattern 802.

Figure 9 illustrates projections 900 corresponding to the projections 700 of Figure 7 but after the method 200 has been used to correct for curvature distortion. The dashed line illustrates a reference scan pattern 902.

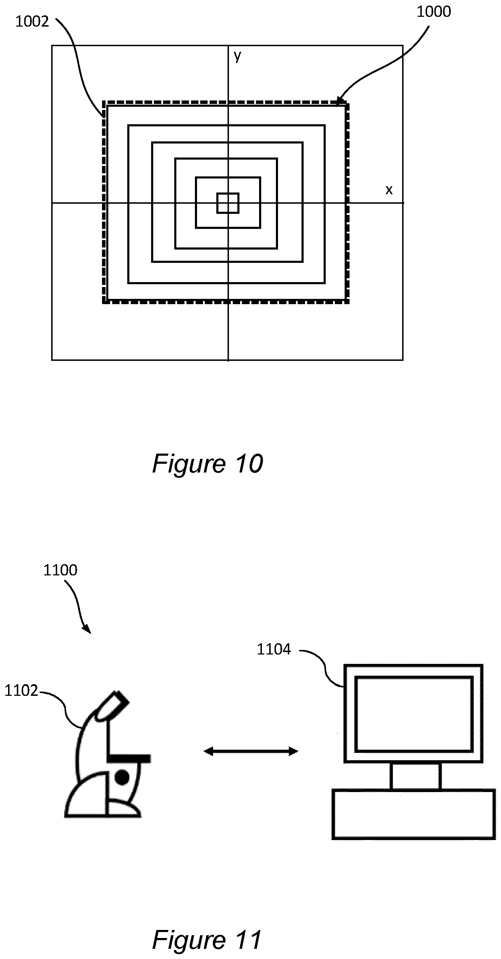

Figure 10 illustrates projections 1000 corresponding to the projections 700 of Figure 7 but after the method 200 has been used to correct for keystone and curvature distortions. The dashed line illustrates a reference scan pattern 1002.

According to some examples, the closed-loop scan control system comprises a Proportional Integral Derivative Compensation (PID) controller. The PID controller enables signal processing with tunable parameters for creating best performance. The parameter values are determined during tuning phase of the controller.

The closed-loop scan control system may be equipped with the ability to collect samples for performance monitoring and diagnostics. Onboard real-time sample collection may provide the ability to perform FFT and signal capture used for automatic tuning and characterization of the system behavior. The collected sample routing to a desired destination is controlled under software and diagnostic or tuning mode selected.

The closed-loop scan control system may be equipped with an overdrive protection mechanism to prevent the delicate MEMS from damage in case of instability. The instability may occur due to a failure that results in positive feedback or unintended feedback that drives the MEMS beyond its safe operating limits. The protection mechanism operates by implementing a high-pass filter to detect motion near its resonance. If detected position goes beyond the max safe limit, a shutdown logic disables the drive output to prevent the device from getting into a runaway condition.

According to an aspect of this disclosure a Computer program with a program code for performing the method 200 when the computer program is run on a processor is provided.

Some embodiments relate to a microscope comprising a system as described in connection with one or more of the Figures 1 to 10. Alternatively, a microscope may be part of or connected to a system as described in connection with one or more of the Figures 1 to 10. Figure 11 shows a schematic illustration of a system 1100 configured to perform a method described herein. The system 1100 comprises a microscope 1102 and a computer system 1104. The microscope 1102 is configured to take images and is connected to the computer system 1104. The computer system 1104 is configured to execute at least a part of a method described herein. The computer system 1104 may be configured to execute a machine learning algorithm. The computer system 1104 and microscope 1102 may be separate entities but can also be integrated together in one common housing. The computer system 1104 may be part of a central processing system of the microscope 1102 and/or the computer system 1104 may be part of a subcomponent of the microscope 1102, such as a sensor, an actor, a camera or an illumination unit, etc. of the microscope 1102. The computer system 1104 may be the computer system 326 described in relation to Figure 3.

The computer system 1104 may comprise the image acquisition unit described above. The computer system 1104 may comprise a processor described above.

The computer system 1104 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 1104 may comprise any circuit or combination of circuits. In one embodiment, the computer system 1104 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 1104 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 1104 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 1104 may also include a display device, one or more speakers, and a keyboard and/or controller, which can include a mouse, trackball, touch screen, voice-recognition device, or any other device that permits a system user to input information into and receive information from the computer system 1104.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

**Claims**

1.  A method for characterizing a scanning mirror in a scan control system to determine feedback parameters for use in a closed-loop feedback configuration of the scan control system, the system (100) comprising:

    a scanning mirror arrangement (102) comprising the scanning mirror (104);
    a position sensing detector (106) having a two-dimensional detection surface (108);
    a light source (110) configured to emit a light beam (112) onto the scanning mirror (104) such that the light beam (112) is deflected onto the position sensing detector (106), wherein the position sensing detector (106) is configured to output a measured position (114) based on the position at which the light beam (112) impinges on the two-dimensional detection surface (108) of the position sensing detector (106), the measured position (114) pertaining to a tilt angle (116) of the scanning mirror (104);
    a scan mirror controller (118) configured to drive, using drive parameters (120), the scanning mirror arrangement (102) such that the scanning mirror (104) is tilted in angle in two-dimensions, and
    a processor (122) communicatively connected to the scan mirror controller (118);
    wherein the method (200) comprises:

    scanning (202), by the scan mirror controller (118), the scanning mirror (104) by using a set of drive parameters (124) thereby forming a scan pattern (126) on the position sensing detector (106) as the light beam (112) is scanned across the two-dimensional detection surface (108) of the position sensing detector (106);
    determining (204), by the position sensing detector (106) a set of measured positions (128) for the scan pattern (126);
    linking (206) the set of measured positions (128) with the set of drive parameters (124);
    determining (208) a set of position deviation values (130) for the set of measured positions (128) relative to a set of reference positions (132) pertaining to a reference scan pattern (134) using a mathematical model;
    determining (210) a set of compensated positions (136) by applying a position compensation algorithm to the determined set of position deviation values (130), wherein the position compensation algorithm comprises a relationship between the set of measured positions (128) and tilt angles (116) for the scanning mirror (104); and
    storing (212) at least one of the set of position deviation values (130) and the set of compensated positions (136) for use as feedback parameters for position feedback (138) in the closed-loop feedback configuration of the scan control system (100).

2.  The method according to claim 1, wherein the scanning (202), by the scan mirror controller (118), the scanning mirror (104) and the determining (204), by the position sensing detector (106) a set of measured positions (128) for the scan pattern (126) are performed in an open-loop configuration of the scan control system.

3.  The method according to claim 1 or 2, wherein the determining (204) of the set of position deviation values (130) for the set of measured positions (128) relative to the set of reference positions (132) is performed by curve fitting using the mathematical model.

4.  The method according to any one of claims 1 to 3, wherein the reference scan pattern (134) is a straight-line scan pattern along an x-axis of the position sensing detector (106) and wherein the set of position deviation values (130) are determined along a y-axis of the position sensing detector (106), the y-axis being orthogonal to the x-axis.

5.  The method according to any one of claims 1 to 4, wherein the position sensing detector (106) forms a plane and has a coordinate system having an x-axis and a y-axis spanning the plane.

6. The method according to claim 4 or 5, wherein the mathematical model is a parabolic equation in the form:

$$\hat{y} = a_{\o} x^2 + b_{\o} x + c_{\o} \quad (\text{Eq } 1)$$

, where $\hat{y}$ is a measured position of the set of measured positions (130) along the y-axis for a position x along the x-axis of the position sensing detector (106) and wherein $a_{\o}$, $b_{\o}$, and $c_{\o}$ are coefficients.

7. The method according to claim 6, wherein the position compensation algorithm comprises a mathematical expression in the form:

$$y = \hat{y} / (K_a x^2 + K_b x + K_c) \qquad (\text{Eq } 2)$$

, where $y$ is the compensated position of the set of compensated positions (136), and $\hat{y}$ is the measured position of the set of measured positions (128) along the y-axis, $K_a$, $K_b$, and $K_c$ are constant coefficients relating to a change in the coefficients $a_{\Phi}$, $b_{\Phi}$, and $c_{\Phi}$ of Eq 1, as a function of the tilt angle, $\Phi$, (116) for the scanning mirror (104) along the y-axis.

8. The method according to claim 7, wherein the change in the coefficients $a_{\Phi}$, $b_{\Phi}$, and $c_{\Phi}$ of Eq 1, has a linear relationship of the form:

$$a_{\o} = K_a y \qquad (\text{Eq } 3)$$

$$b_{\o} = K_b y \qquad (\text{Eq } 4)$$

$$c_{\o} = K_c y \qquad (\text{Eq } 5)$$

wherein, $\Phi$ is the tilt angle (116) for the scanning mirror (104) for a compensated position y along the y-axis.

9. The method according to any one of claims 1 to 8, the method (200) further comprises:

determining (214) a first curvature distortion for the scanning mirror (104) by using a first curvature compensation algorithm, the algorithm comprising a mathematical model on the form:

$$\hat{x} = a_\theta y^2 + b_\theta y + x \qquad (\text{Eq } 6)$$

, where $\hat{x}$ is the measured position of the set of measured positions (128) along the x-axis and $a_\theta$ and $b_\theta$ are coefficients of curvature describing the curvature distortion; and

determining (216) a set of compensated positions (136) by compensating for the deviation in x value along the x-axis for the set of measured positions (128) using the expression:

$$x = \hat{x} - (a_\theta y^2 + b_\theta y) \ (\text{Eq } 7)$$

, where x is the compensated position for a measured position $\hat{x}$ of the set of measured positions (128) along the x-axis; and

storing (218) the set of compensated positions (136) and/or position deviation values (130) in the form of the coefficients of curvature for use as feedback parameters for the closed-loop position feedback (138) in the closed-loop feedback configuration of the scan control system.

10. The method according to any one of claims 1 to 9, the method (200) further comprises:

determining (220) a second curvature distortion for the scanning mirror (104) by using a second curvature compensation algorithm, the algorithm comprising a mathematical model of the form:

$$\hat{y} = \tilde{a}_{\o} x^2 + \tilde{b}_{\o} x + y \qquad (\text{Eq } 8)$$

, where $\hat{y}$ is the measured position along the y-axis of a set of measured positions (130), y is the compensated position, $\tilde{a}_{\o}$ and $\tilde{b}_{\o}$ are coefficients describing the curvature distortion, and x is the compensated position along the x-axis; determining (222) a set of compensated positions (136) by compensating for the curvature distortion in measured positions along the y-axis using the expression:

$$y = \hat{y} - (\tilde{a}_{\o} x^2 + \tilde{b}_{\o} x) \qquad (\text{Eq } 9)$$

and storing (224) set of compensated positions (136) and/or position deviation values (130) in the form of the coefficients describing the curvature distortion for use as feedback parameters for the closed-loop position feedback (138) in the closed-loop feedback configuration of the scan control system.

11. A scan control system for controlling mirror position for a scanning mirror in a closed-loop feedback configuration, the system (100) being arranged to perform the method (200) according to any one of claims 1 to 10, the system (100) comprising:

a scanning mirror arrangement (102) comprising the scanning mirror (104);
a position sensing detector (106) having a two-dimensional detection surface (108);
a light source (110) configured to emit a light beam (112) onto the scanning mirror (104) such that the light beam (112) is deflected onto the position sensing detector (106), wherein the position sensing detector (106) is configured to output a measured position (114) based on the position at which the light beam (112) impinges on the two-dimensional detection surface (108) of the position sensing detector (106), the measured position (114) pertaining to a tilt angle (116) of the scanning mirror (104);
a scan mirror controller (118) configured to drive, using drive parameters (120), the scanning mirror arrangement (102) such that the scanning mirror (104) is tilted in angle in two-dimensions;
a processor (122) communicatively connected to the scan mirror controller (118), wherein the scan mirror controller (118) is configured to receive at least one of the set of position deviation values (130) and a set of compensated positions (136) for use as feedback parameters for position feedback (138) in the closed-loop feedback configuration of the scan control system (100), the set of compensated positions (136) pertaining to a position compensation algorithm being applied to a determined set of position deviation values (130), wherein the determined set of position deviation values (130) is determined, using a mathematical model, for a set of measured positions (128) relative to a set of reference positions (132); and wherein the position compensation algorithm comprises a relationship between the set of measured positions (128) and tilt angles (116) for the scanning mirror (104).

12. A scan control system for controlling mirror position for a scanning mirror in a closed-loop feedback configuration, the system (100) comprising:

a scanning mirror arrangement (102) comprising the scanning mirror (104);
a position sensing detector (106) having a two-dimensional detection surface (108);
a light source (110) configured to emit a light beam (112) onto the scanning mirror (104) such that the light beam (112) is deflected onto the position sensing detector (106), wherein the position sensing detector (106) is configured to output a measured position (114) based on the position at which the light beam (112) impinges on the two-dimensional detection surface (108) of the position sensing detector (106), the measured position (114) pertaining to a tilt angle (116) of the scanning mirror (104);
a scan mirror controller (118) configured to drive, using drive parameters (120), the scanning mirror arrangement (102) such that the scanning mirror (104) is tilted in angle in two-dimensions;
a processor (122) communicatively connected to the scan mirror controller (118) and a memory (123);
wherein in the memory (123) comprises at least one of position deviation values (130) and a set of compensated positions (136) for use as feedback parameters for position feedback (138) in the closed-loop feedback configuration of the scan control system (100), the set of compensated positions (136) pertaining to a determined (208) a set of position deviation values (130) obtained for a set of measured positions (128) relative to a set of reference positions (132).

13. The system according to claim 11 or 12, wherein the scanning mirror arrangement (102) is a micro-electromechanical system, MEMS, scanning mirror arrangement.

14. Use of the system (100) according to any one of claims 11 to 13 for optical coherence tomography, OCT, based microscopy (1102).

15. An optical coherence tomography, OCT, system configured to operate using the scan control system (100) according to any one of claims 11 to 13, the OCT system (300) further comprising:

a sample light source (302) configured to emit a sample light beam (304) onto the scanning mirror (104) such that the sample light beam (304) is deflected onto a sample (306), wherein the scan controller is configured to laterally scan (308) the sample light beam (304) across a surface (310) of the sample (306) using the close-loop position feedback (138); and
an optical detection system (312) configured to detect light reflected back from the sample (306) such that an optical image (314) of the sample (306) is obtained, and a reference light beam (316), wherein the OCT system (300) is configured to generate axially resolved optical information (318) from the sample (306) as the sample light beam (304) is scanned laterally (308) across the sample (306) by using optical path length differences OPLD, between the reference light beam (316) and the sample light beam (304).

16. A Computer program with a program code for performing the method (200) according to any one of claims 1 to 10 when the computer program is run on a processor (1104).

*Figure 1a*

*Figure 1b*

*Figure 1c*

Figure 2

*Figure 3*

*Figure 4a*

*Figure 4b*

*Figure 5a*

*Figure 5b*

Figure 6

Figure 7

Figure 8

Figure 9

*Figure 10*

*Figure 11*

Europäisches
Patentamt

European
Patent Office

Office européen
des brevets

# EUROPEAN SEARCH REPORT

Application Number

EP 23 16 4424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 514 950 A (SHANDONG INSPUR SCIENT RESEARCH INSTITUTE CO LTD) 19 October 2021 (2021-10-19) | 1,2, 11-13,16 | INV. G01B9/02091 G01B9/02 |
| Y | * the whole document * | 3-10 | G01B9/02055 G02B26/10 |
| X | MILANOVIC VELJKO ET AL: "Iterative learning control algorithm for greatly increased bandwidth and linearity of MEMS mirrors in LiDAR and related imaging applications", PROCEEDINGS OF SPIE; [PROCEEDINGS OF SPIE ISSN 0277-786X VOLUME 10524], SPIE, US, vol. 10545, 22 February 2018 (2018-02-22), pages 1054513-1054513, XP060105708, DOI: 10.1117/12.2291428 ISBN: 978-1-5106-1533-5 * pages 1, 5 - page 9 * | 1-3, 11-16 | G01B21/04 G02B26/12 |
| Y | CN 103 932 679 A (UNIV TIANJIN) 23 July 2014 (2014-07-23) * the whole document * | 3-10 | |
| A | LIU TAILONG ET AL: "Scanning optimization of an electrothermally-actuated MEMS mirror for applications in optical coherence tomography endoscopy", SENSORS AND ACTUATORS A: PHYSICAL, ELSEVIER BV, NL, vol. 335, 11 January 2022 (2022-01-11), XP086975026, ISSN: 0924-4247, DOI: 10.1016/J.SNA.2022.113377 [retrieved on 2022-01-11] * the whole document * | 1-16 | TECHNICAL FIELDS SEARCHED (IPC) G01B G02B |

The present search report has been drawn up for all claims

| Place of search | Date of completion of the search | Examiner |
|---|---|---|
| Munich | 31 August 2023 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## EP 4 439 005 A1

## ANNEX TO THE EUROPEAN SEARCH REPORT
## ON EUROPEAN PATENT APPLICATION NO.

EP 23 16 4424

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | | Publication date | Patent family member(s) | Publication date |
|---|---|---|---|---|
| CN 113514950 | A | 19-10-2021 | NONE | |
| CN 103932679 | A | 23-07-2014 | NONE | |

EPO FORM P0459

For more details about this annex : see Official Journal of the European Patent Office, No. 12/82

29